(19) Europäisches Patentamt
European Patent Office
Office européen des brevets

(11) **EP 2 827 637 A1**

(12) **EUROPEAN PATENT APPLICATION**
published in accordance with Art. 153(4) EPC

(43) Date of publication:
**21.01.2015 Bulletin 2015/04**

(21) Application number: **13760807.1**

(22) Date of filing: **12.03.2013**

(51) Int Cl.:
**H04W 24/10** (2009.01)     **H04W 28/16** (2009.01)

(86) International application number:
**PCT/JP2013/056718**

(87) International publication number:
**WO 2013/137219 (19.09.2013 Gazette 2013/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.03.2012   JP 2012061222**

(71) Applicant: **NTT DOCOMO, INC.**
**Chiyoda-ku**
**Tokyo 100-6150 (JP)**

(72) Inventors:
• **NAGATA, Satoshi**
**Tokyo 100-6150 (JP)**
• **WANG, Jing**
**Beijing 100190 (CN)**
• **YUN, Xiang**
**Beijing 100190 (CN)**
• **CHEN, Lan**
**Beijing 100190 (CN)**

(74) Representative: **Hoffmann Eitle**
**Patent- und Rechtsanwälte PartmbB**
**Arabellastraße 30**
**81925 München (DE)**

(54) **WIRELESS COMMUNICATION SYSTEM, USER TERMINAL, WIRELESS BASE STATION DEVICE, AND WIRELESS COMMUNICATION METHOD**

(57)     The present invention is designed to prevent the increase of the overhead of feedback information, and furthermore improve the accuracy of updated CQIs, upon updating CQIs that are given as feedback, when CoMP transmission is applied. The radio communication system of the present invention is formed with a plurality of radio base station apparatuses and a user terminal that is configured to be able to perform coordinated multiple-point transmission/reception with the plurality of radio base station apparatuses and, in this radio communication system, the user terminal calculates a channel quality indicator for coordinated multiple-point transmission using an interference component ratio between cells and feeds back the channel quality indicator, and the radio base station apparatus re-calculates a channel quality indicator in accordance with a transmission mode of coordinated multiple-point transmission, using the channel quality indicator fed back from the user terminal.

| FEEDBACK INDEX | QUANTIZATION VALUE $\Delta I$ (dB) |
|---|---|
| 0 | −2.6 |
| 1 | −2.2 |
| 2 | −1.8 |
| 3 | −1.4 |

FIG.4A

| FEEDBACK INDEX | QUANTIZATION VALUE $\Delta I$ (dB) |
|---|---|
| 0 | −2.5 |
| 1 | −1.9 |
| 2 | −1.7 |
| 3 | −1.2 |

FIG.4B

| FEEDBACK INDEX | QUANTIZATION VALUE $\Delta I$, $\Delta S$ (dB) |
|---|---|
| 0 | $x_0$ |
| 1 | $x_1$ |
| 2 | $x_2$ |
| … | … |
| $2^N - 1$ | $x_{2^N-1}$ |

FIG.4C

EP 2 827 637 A1

**Description**

Technical Field

The present invention relates to a radio communication system, a user terminal, a radio base station apparatus and a radio communication method that are applicable to a cellular system and so on.

Background Art

In a UMTS (Universal Mobile Telecommunications System) network, attempts are made to optimize features of the system, which are based on W-CDMA (Wideband Code Division Multiple Access), by adopting HSDPA (High Speed Downlink Packet Access) and HSUPA (High Speed Uplink Packet Access), for the purposes of improving spectral efficiency and improving the data rates. With this UMTS network, long-term evolution (LTE) is under study for the purposes of further increasing high-speed data rates, providing low delay, and so on (non-patent literature 1).

In the third-generation system, a transmission rate of maximum approximately 2 Mbps can be achieved on the downlink by using a fixed band of approximately 5 MHz. In an LTE system, it is possible to achieve a transmission rate of about maximum 300 Mbps on the downlink and about 75 Mbps on the uplink by using a variable band which ranges from 1.4 MHz to 20 MHz. With the UMTS network, successor systems of LTE are also under study for the purpose of achieving further broadbandization and higher speed (for example, LTE advanced (LTE-A)).

Citation List

Non-Patent Literature

Non-Patent Literature 1: 3GPP, TR25.912 (V7.1.0), "Feasibility Study for Evolved UTRA and UTRAN," Sept. 2006

Summary of the Invention

Technical Problem

As a promising technique for further improving the system performance of an LTE system, there is inter-cell orthogonalization. For example, in an LTE-A system, intra-cell orthogonalization is made possible by orthogonal multiple access on both the uplink and the downlink. On the downlink, orthogonalization is provided between user terminal UEs (User Equipment) in the frequency domain. Between cells, like in W-CDMA, interference randomization by one-cell frequency reuse is fundamental.

In the 3GPP (3rd Generation Partnership Project), coordinated multiple-point transmission/reception (CoMP) techniques are under study as techniques for realizing inter-cell orthogonalization. In this CoMP transmission/reception, a plurality of cells coordinate and perform signal processing for transmission and reception for one user terminal UE or for a plurality of user terminal UEs. For example, on the downlink, simultaneous transmission of a plurality of cells adopting precoding, coordinated scheduling/beam forming, and so on are under study. By applying these CoMP transmission/reception techniques, improvement of throughput performance is expected, especially with respect to user terminal UEs located on cell edges.

To apply CoMP transmission/reception techniques, it is necessary to feed back channel quality indicators (CQIs) for a plurality of cells from a user terminal to a radio base station apparatus. Since there are various types of transmission modes in CoMP transmission/reception techniques, a radio base station apparatus re-calculates and updates CQIs that are fed back, to adapt to these transmission modes. Upon such updating, it is necessary to prevent the increase of the overhead of feedback information, and furthermore improve the accuracy of the updated CQIs.

The present invention has been made in view of the above, and it is therefore an object of the present invention to provide a radio communication system, a user terminal, a radio base station apparatus and a radio communication method which, upon updating CQIs that are fed back when CoMP transmission is applied, prevent the increase of the overhead of feedback information and furthermore improve the accuracy of the updated CQIs.

Solution to Problem

The radio communication system of the present invention is a radio communication system to include a plurality of radio base station apparatuses and a user terminal that is configured to be able to perform coordinated multiple-point transmission/reception with the plurality of radio base station apparatuses, and, in this radio communication system, the user terminal has: a calculation section that calculates a channel quality indicator for coordinated multiple-point transmission using an interference component ratio between cells; and a transmission section that feeds back the channel quality indicator; and the radio base station apparatus has: a re-calculation section that re-calculates a channel quality indicator in accordance with a transmission mode of coordinated multiple-point transmission, using the channel quality indicator fed back from the user terminal.

The user terminal of the present invention is configured to be able to perform coordinated multiple-point transmission/reception with a plurality of radio base station apparatuses, and this user terminal has: a calculation section that calculates a channel quality indicator for coordinated multiple-point transmission using an interference component ratio between cells; and a transmission section that feeds back the channel quality indicator.

The radio base station apparatus of the present invention is configured to be able to perform coordinated multiple-point transmission/reception with a user terminal, and this radio base station apparatus has: a re-calculation section that re-calculates a channel quality indicator in accordance with a transmission mode of coordinated multiple-point transmission, using the channel quality indicator fed back from the user terminal.

The radio communication method of the present invention is a radio communication method for a plurality of radio base station apparatuses and a user terminal that is configured to be able to perform coordinated multiple-point transmission/reception with the plurality of radio base station apparatuses, and this radio communication method includes the steps of: at the user terminal: calculating a channel quality indicator for coordinated multiple-point transmission using an interference component ratio between cells; and feeding back the channel quality indicator; and at the radio base station apparatus: re-calculating a channel quality indicator in accordance with a transmission mode of coordinated multiple-point transmission, using the channel quality indicator fed back from the user terminal.

Technical advantage of the Invention

According to the present invention, upon updating CQIs that are given as feedback when CoMP transmission is applied, it is possible to prevent the increase of the overhead of feedback information, and furthermore improve the accuracy of the updated CQIs.

Brief Description of the Drawings

FIG. 1 provides diagrams to explain coordinated multiple-point transmission;
FIG. 2 provides schematic diagrams to show configurations of radio base station apparatuses that are adopted in coordinated multiple-point transmission/reception;
FIG. 3 provides diagrams to explain coordinated multiple-point transmission modes;
FIG. 4 provides diagrams to show tables that are used to report CQIs defined according to the present invention;
FIG. 5 is a diagram to explain a system configuration of a radio communication system;
FIG. 6 is a diagram to explain an overall configuration of a radio base station apparatus;
FIG. 7 is a functional block diagram corresponding to a baseband processing section in a radio base station apparatus;
FIG. 8 is a diagram to explain an overall configuration of a user terminal; and
FIG. 9 is a functional block diagram corresponding to a baseband processing section of a user terminal.

Description of Embodiments

An embodiment of the present invention will be described below in detail with reference to the accompanying drawings.

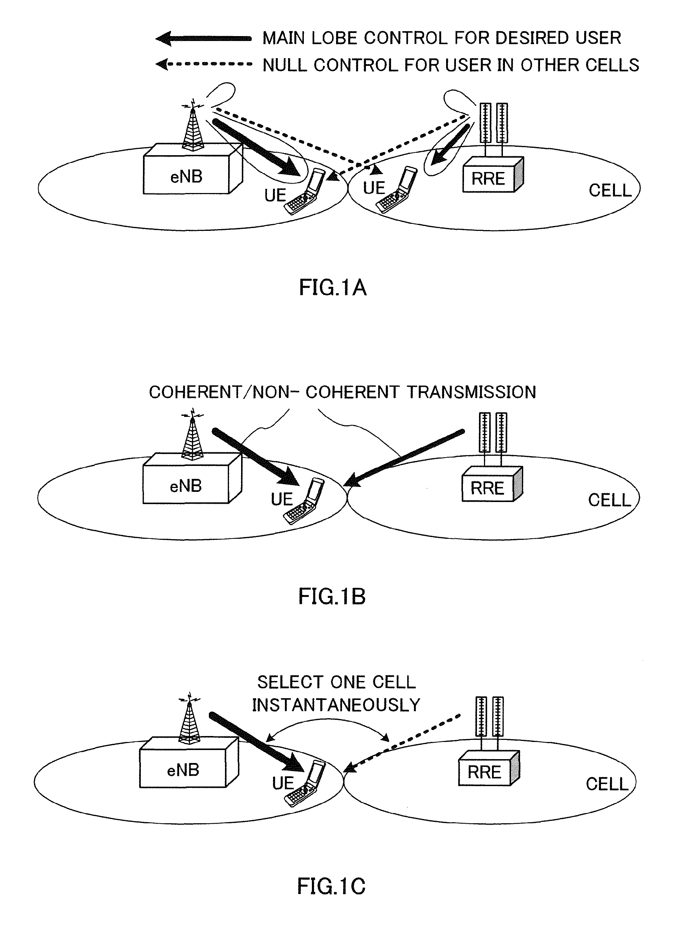

Downlink CoMP transmission will be described using FIG. 1. Downlink CoMP transmission includes coordinated scheduling/coordinated beamforming (CS/CB), and joint processing. Coordinated scheduling/coordinated beamforming refers to the method of transmitting a shared data channel to one user terminal UE from only one cell, and, as shown in FIG. 1A, allocates radio resources in the frequency/space domain, taking into account interference from other cells and interference against other cells. Joint processing refers to the method of transmitting a shared data channel from a plurality of cells, at the same time, by applying precoding, and includes joint transmission to transmit a shared data channel from a plurality of cells to one user terminal UE as shown in FIG. 1B, and dynamic point selection (DPS) to select one cell instantaneously and transmit a shared data channel as shown in FIG. 1C. There is also a transmission mode referred to as dynamic point blanking (DPB), which stops data transmission in a certain region with respect to a transmission point that causes interference.

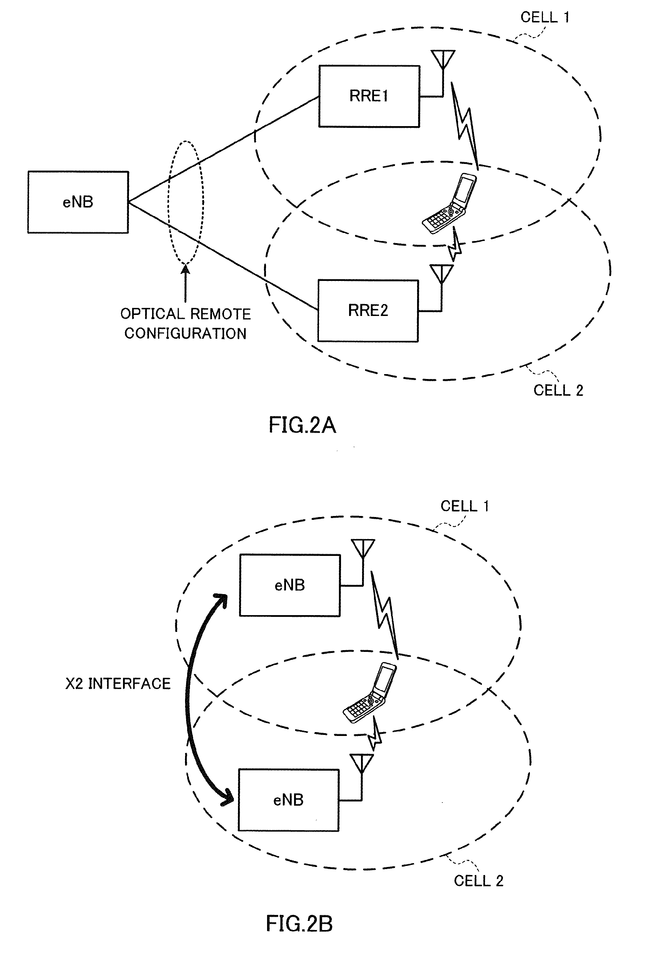

As for the configuration to implement CoMP transmission/reception, there are, for example, a configuration (centralized control based on an RRE configuration) to include a plurality of remote radio equipment (RREs) that are connected with a radio base station apparatus (radio base station apparatus eNB) by optical fiber and so on as shown in FIG. 2A, and a configuration (autonomous distributed control based on an independent base station configuration) of a radio base station apparatus (radio base station apparatus eNB) as shown in FIG. 2B. Note that, although FIG. 2A shows a configuration to include a plurality of remote radio equipment RREs, it is equally possible to use a configuration to include only single remote radio equipment RRE, as shown in FIG. 1.

In the configuration shown in FIG. 2A (RRE configuration), remote radio equipment RRE 1 and RRE 2 are controlled in a centralized fashion in a radio base station apparatus eNB. In the RRE configuration, the radio base station apparatus eNB (central base station) that performs baseband signal processing and control for a plurality of remote radio equipment RREs, and each cell (that is, each remote radio equipment RRE) are connected by baseband signals using optical fiber, so that it is possible to execute radio resource control between the cells in the central base station altogether. That is, the problems of signaling delay and overhead between radio base station apparatus eNBs, which become problems in an independent base station configuration, are insignificant, and high-speed radio resource control between cells becomes comparatively easy. Consequently, in the RRE configuration, it is possible to apply a method to use fast signal processing between cells such as simultaneous transmission of a plurality of cells, to the downlink.

In the configuration shown in FIG. 2B (independent base station configuration), a plurality of radio base station apparatus eNBs (or RREs) each perform radio resource allocation control such as scheduling. In this case, timing information and radio resource allocation information such as scheduling are transmitted to one radio base station apparatus eNB, if necessary, using the X2 interface between the radio base station apparatus eNB of cell 1 and the radio base station apparatus eNB of cell 2, for coordination between the cells.

CoMP transmission is applied to improve the throughput of user terminals located on cell edges. Consequently, control is executed to apply CoMP transmission when there is a user terminal located on a cell edge. In this case, a radio base station apparatus determines the difference between the quality information of each cell (for example, RSRP (Reference Signal Received Power), RSRQ (Reference Signal Received Quality), or SINR (Signal Interference plus Noise Ratio) from the user terminal, and, when the difference is equal to or less than a threshold value -- that is, when there is little difference in quality between cells -- decides that the user terminal is located on a cell edge, and applies CoMP transmission. When the difference between the quality information of each cell exceeds a threshold value -- that is, when there are significant quality differences between cells -- the radio base station apparatus decides that the user terminal is close to the radio base station apparatus of one cell and that the user terminal is near the center of a cell, and does not apply CoMP transmission.

When CoMP transmission is applied, the user terminal feeds back channel state information for each of a plurality of cells, to the radio base station apparatus (the radio base station apparatus of the serving cell). When CoMP transmission is not applied, the user terminal feeds back the channel state information of the serving cell to the radio base station apparatus.

Also, when CoMP transmission is applied, a radio base station apparatus updates CSI (in particular, CQIs: Channel Quality Indicators) so as to make it applicable to the various modes of CoMP transmission described above. Upon this updating, it is necessary to prevent the increase of the overhead of feedback information and furthermore improve the accuracy of updated CSI. Conventionally, despite various proposals for determining CQIs for all types of CoMP, preventing the increase of the overhead of feedback information and at the same time improving the accuracy of updated CSI has not been achieved sufficiently.

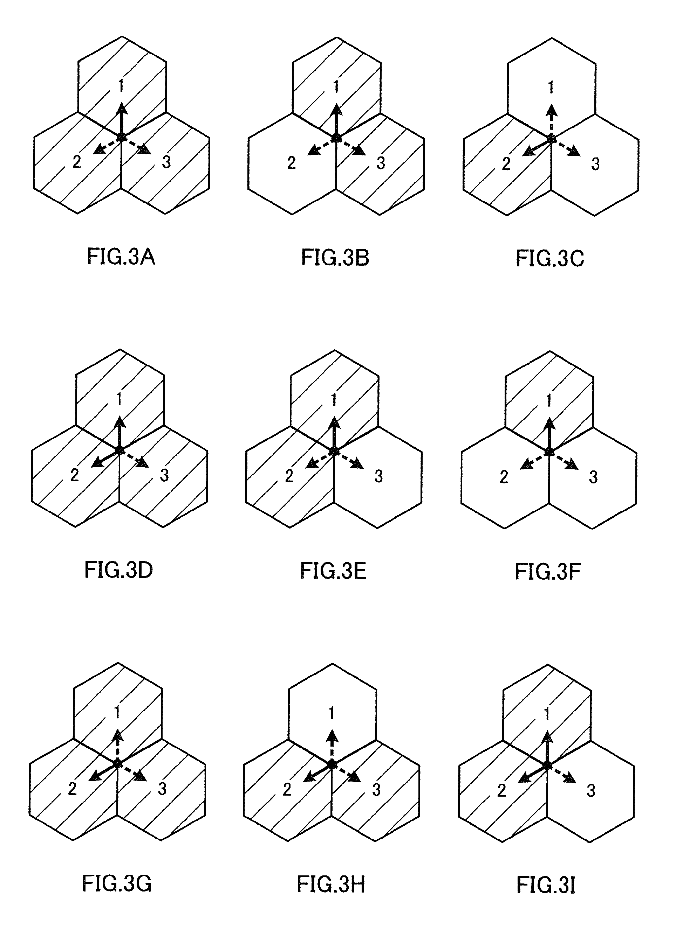

Here, proposals for determining CQIs for all types of CoMP will be described. Assume that, in the following description, as shown in FIG. 3, a CoMP set (coordinated cells including the serving cell) includes three cells (cell 1 to cell 3), and the CQIs of these cells will be referred to as CQI 1, CQI 2 and CQI 3, respectively. Here, $S_1$ is the signal component (signal strength) of the serving cell, $S_2$ is the signal component of the cell where the signal strength is the second strongest, $S_3$ is the signal component of the cell where the signal strength is the third strongest, $I_{OUT}$ is interference from cells outside and apart from the coordinated cells, and N is thermal noise. Here, assume that the signal strength of the serving cell (cell 1) is the strongest, the signal strength of cell 2 is the second strongest, and the signal strength of cell 3 is the third strongest.

(Conventional proposal 1)

In this proposal, a CQI is defined assuming that the desired signal of the applicable cell (for CQI 1, cell 1) is the signal component and signals other than the desired signal of that cell constitute the interference component. To be more specific, CQI 1, CQI 2 and CQI 3 are defined as shown in following equation 1 to equation 3, respectively.

[1]

$$\frac{S_1}{I_{out}+N+S_2+S_3} \qquad \dots (\text{Equation 1})$$

[2]

$$\frac{S_2}{I_{out}+N+S_1+S_3} \qquad \dots (\text{Equation 2})$$

[3]

$$\frac{S_3}{I_{out}+N+S_1+S_2} \qquad \dots (\text{Equation 3})$$

In this case, when the CQIs are updated in a radio base station apparatus in accordance with various CoMP transmission modes, the following will be given.

<Single-cell transmission>

When the serving cell is cell 1 (FIG. 3A), CQI 1 may be used as the CQI. In FIG. 3, cells that are shown with diagonal lines are cells that are transmitting, cells that are shown with solid arrows are cells that are transmitting, and cells that are shown with dotted arrows are cells that are not transmitting. Consequently, cells that are shown with diagonal lines and solid arrows are cells that belong to the CoMP set and that are transmitting, and cells that are shown with diagonal lines and dotted arrows are cells that belong to the CoMP set and that are nevertheless not transmitting. Also, cells without diagonal lines are cells that do not belong to the CoMP set.

<CoMP transmission mode: CS and DPS/DPB from the serving cell>

In this transmission mode, signals are transmitted in cell 1 and cell 3. If cell 1 is the serving cell, CQI 1 is re-calculated as shown in following equation 4 (FIG. 3B).

[4]

$$\frac{CQI_1 \times (1 + CQI_2)}{1 - CQI_1 \times CQI_2} \qquad \dots (\text{Equation 4})$$

< CoMP transmission mode: DPS/DPB from cells other than the serving cell>

In this transmission mode, signals are transmitted in cell 2. If cell 1 is the serving cell, in DPS/DPB from a cell apart from cell 1 -- for example, cell 2 -- CQI 2 is re-calculated as shown in following equation 5 (FIG. 3C).

[5]

$$\frac{CQI_2(1 + CQI_1)(1 + CQI_3)}{1 - CQI_1CQI_2 - CQI_2CQI_3 - CQI_1CQI_3 - 2CQI_1CQI_2CQI_3}$$

$$... \text{(Equation 5)}$$

<CoMP transmission mode: JT>

In this transmission mode, signals are transmitted in cell 1 to cell 3, and, if the cells to carry out JT are cell 1 and cell 2, in JT, the CQIs are re-calculated as shown in following equation 6 (FIG. 3D).

[6]

$$\frac{(\overline{)CQI_1(1 + CQI_2)} + \sqrt{CQI_2(1 + CQI_1)})^2}{1 - CQI_1CQI_2} \quad ... \text{(Equation 6)}$$

With conventional proposal 1, as clear from equation 4 to equation 6 given above, there are some terms that give products of CQIs. Considering that a CQI is a quantized value, there is a problem with conventional proposal 1 that CQIs are determiend by re-calculating products of quantized values, and this may risk lower accuracy.

(Conventional proposal 2)

In this proposal, a CQI is defined assuming that the desired signal of the applicable cell is the signal component and interference and thermal noise from cells apart from the CoMP set constitute the interference component. To be more specific, CQI 1, CQI 2 and CQI 3 are defined as shown in following equation 7 to equation 9, respectively.

[7]

$$\frac{S_1}{I_{out} + N} \quad ... \text{(Equation 7)}$$

[8]

$$\frac{S_2}{I_{out} + N} \quad ... \text{(Equation 8)}$$

[9]

$$\frac{S_3}{I_{out} + N} \quad ... \text{(Equation 9)}$$

In this case, when the CQIs are updated in a radio base station apparatus in accordance with various CoMP transmission modes, the following will be given.

<Single-cell transmission>

If cell 1 is the serving cell (FIG. 3A), CQI 1 is re-calculated as shown in following equation 10.

[10]

$$\frac{CQI_1}{1 + CQI_2 + CQI_3} \qquad \dots (\text{Equation } 10)$$

< CoMP transmission mode: CS and DPS/DPB from the serving cell>

In this transmission mode, signals are transmitted in cell 1 and cell 3. If cell 1 is the serving cell, CQI 1 is re-calculated as shown in following equation 11 (FIG. 3B).

[11]

$$\frac{CQI_1}{1 + CQI_3} \qquad \dots (\text{Equation } 11)$$

<CoMP transmission mode: DPS/DPB from cells other than the serving cell>

In this transmission mode, signals are transmitted in cell 2. If cell 1 is the serving cell, in DPS/DPB from a cell apart from cell 1 -- for example, cell 2 -- CQI 2 is the CQI (FIG. 3C).

<CoMP transmission mode: JT>

In this transmission mode, signals are transmitted in cell 1 to cell 3, and, if the cells to carry out JT are cell 1 and cell 2, in JT, the CQIs are re-calculated as shown in following equation 12 (FIG. 3D).

[12]

$$\frac{(\sqrt{CQI_1} + \sqrt{CQI_2})^2}{1 + CQI_3} \qquad \dots (\text{Equation } 12)$$

In conventional proposal 2, CQI 1 is not a CQI to assume single-cell transmission, and therefore the accuracy of CQI decreases upon single-cell transmission. This is not preferable when making a fall back to single-cell transmission.

(Conventional proposal 3)

In this proposal, a CQI is defined assuming that the desired signal of the applicable cell is the signal component and signals other than the signal of the serving cell (cell 1) constitute the interference component. To be more specific, CQI 1, CQI 2 and CQI 3 are defined as shown in following equation 1, following equation 13 and following equation 14, respectively.

[13]

$$\frac{S_1}{I_{out}+N+S_2+S_3} \qquad \ldots \text{(Equation 1)}$$

[14]

$$\frac{S_2}{I_{out}+N+S_2+S_3} \qquad \ldots \text{(Equation 13)}$$

[15]

$$\frac{S_3}{I_{out}+N+S_2+S_3} \qquad \ldots \text{(Equation 14)}$$

In this case, when the CQIs are updated in a radio base station apparatus in accordance with various CoMP transmission modes, the following will be given.

<Single-cell transmission>

If cell 1 is the serving cell, CQI 1 may be used as the CQI (FIG. 3A).

<CoMP transmission mode: CS and DPS/DPB from the serving cell>

In this transmission mode, signals are transmitted in cell 1 and cell 3. If cell 1 is the serving cell, CQI 1 is re-calculated as shown in following equation 15 (FIG. 3B).

[16]

$$\frac{CQI_1}{1-CQI_2} \qquad \ldots \text{(Equation 15)}$$

< CoMP transmission mode: DPS/DPB from cells other than the serving cell>

In this transmission mode, signals are transmitted in cell 2. If cell 1 is the serving cell, in DPS/DPB from a cell apart from cell 1 -- for example, cell 2 -- CQI 2 is re-calculated as shown in following equation 16 (FIG. 3C).

[17]

$$\frac{CQI_2}{1-CQI_2-CQI_3} \qquad \ldots \text{(Equation 16)}$$

<CoMP transmission mode: JT>

In this transmission mode, signals are transmitted in cell 1 to cell 3, and, if the cells to carry out JT are cell 1 and cell 2, in JT, the CQIs are re-calculated as shown in following equation 17 (FIG. 3D).

[18]

$$\frac{(\sqrt{CQI_1} + \sqrt{CQI_2})^2}{1 - CQI_2} \qquad \cdots \text{(Equation 17)}$$

According to conventional proposal 3, the range of values which CQI 2 and CQI 3 may assume is large, and therefore there is a problem that high accuracy cannot be expected when quantization is executed with a limited number of bits.

(Conventional Proposal 4)

In this proposal, the CQI of the serving cell (cell 1) is defined assuming that the desired signal of that cell is the signal component and signals other than the signal of the serving cell constitute the interference component, and the CQIs of coordinated cells (cell 2 and cell 3) are defined with the ratios of the signal components of these cells to the signal component of the serving cell. That is, the CQIs of coordinated cells (cell 2 and cell 3) are defined using the ratios ($\Delta S_2$ and $\Delta S_3$) of the signal components of the coordinated cells (cell 2 and cell 3) to the signal component (the desired signal of the serving cell) of the serving cell (cell 1). To be more specific, CQI 1, CQI 2 and CQI 3 are defined as shown in following equation 1, following equation 18, and following equation 19, respectively.

[19]

$$\frac{S_1}{I_{out} + N + S_2 + S_3} \qquad \cdots \text{(Equation 1)}$$

[20]

$$\Delta S_2 = \frac{S_2}{S_1} \qquad \cdots \text{(Equation 18)}$$

[21]

$$\Delta S_3 = \frac{S_3}{S_1} \qquad \cdots \text{(Equation 19)}$$

In this case, when the CQIs are updated in a radio base station apparatus in accordance with various CoMP transmission modes, the following will be given.

<Single-cell transmission>

If cell 1 is the serving cell, CQI 1 can be used as the CQI (FIG. 3A).

<CoMP transmission mode: CS and DPS/DPB from the serving cell>

In this transmission mode, signals are transmitted in cell 1 and cell 3. If cell 1 is the serving cell, CQI 1 is re-calculated as shown in following equation 20 (FIG. 3B).

[22]

$$\frac{CQI_1}{1 - CQI_1 \times \Delta S_2} \qquad \dots \text{(Equation 20)}$$

<CoMP transmission mode: DPS/DPB from cells other than the serving cell>

In this transmission mode, signals are transmitted in cell 2. If cell 1 is the serving cell, in DPS/DPB from a cell apart from cell 1 -- for example, cell 2 -- CQI 2 is re-calculated as shown in following equation 21 (FIG. 3C).

[23]

$$\frac{CQI_1 \times \Delta S_2}{1 - CQI_1 \times \Delta S_2 - CQI_1 \times \Delta S_3} \qquad \dots \text{(Equation 21)}$$

<CoMP transmission mode: JT>

In this transmission mode, signals are transmitted in cell 1 to cell 3, and, if the cells to carry out JT are cell 1 and cell 2, in JT, the CQIs are re-calculated as shown in following equation 22 (FIG. 3D).

[24]

$$\frac{(\sqrt{CQI_1} + \sqrt{CQI_1 \times \Delta S_2})^2}{1 - CQI_1 \times \Delta S_2} \qquad \dots \text{(Equation 22)}$$

According to conventional proposal 4, the range of values which $\Delta S_2$ and $\Delta S_3$ may assume is large, and therefore there is a problem that high accuracy cannot be expected when quantization is executed with a limited number of bits.

(Conventional proposal 5)

In this proposal, the CQI of the serving cell (cell 1) is defined assuming that the desired signal of that cell is the signal component and signals other than the signal of the serving cell constitute the interference component, and the CQIs of coordinated cells (cell 2 and cell 3) are defined with the differences between the CQIs for CoMP transmission and the CQI for single-cell transmission. To be more specific, CQI 1, CQI 2 and CQI 3 are defined with following equation 1, following equation 23, and following equation 24.

[25]

$$\frac{S_1}{I_{out} + N + S_2 + S_3} \qquad \dots \text{(Equation 1)}$$

[26]

$$\Delta_1 = CoMP\_CQI\_1 - SingleCell\_CQI \qquad \ldots (Equation\ 23)$$

[27]

$$\Delta_2 = CoMP\_CQI\_2 - SingleCell\_CQI \qquad \ldots (Equation\ 24)$$

In this case, when the CQIs are updated in a radio base station apparatus in accordance with various CoMP transmission modes, the following will be given.

<Single-cell transmission>

If cell 1 is the serving cell, CQI 1 can be used as the CQI (FIG. 3A).

<CoMP transmission mode: CS and DPS/DPB from the serving cell>

In this transmission mode, signals are transmitted in cell 1 and cell 3. If cell 1 is the serving cell, CQI 1 is re-calculated as shown in following equation 25 (FIG. 3B).

[28]

$$CQI_1 + \Delta_{cs} \left( \Delta_{cs} = \frac{S_1}{I_{out} + N + S_3} - \frac{S_1}{I_{out} + N + S_2 + S_3} \right) \qquad \ldots (Equation\ 25)$$

<CoMP transmission mode: DPS/DPB from cells other than the serving cell>

In this transmission mode, signals are transmitted in cell 2. If cell 1 is the serving cell, in DPS/DPB from a cell apart from cell 1 -- for example, cell 2 -- CQI 2 is re-calculated as shown in following equation 26 (FIG. 3C).

[29]

$$CQI_1 + \Delta_{DPS} \left( \Delta_{DPS} = \frac{S_2}{I_{out} + N} - \frac{S_1}{I_{out} + N + S_2 + S_3} \right) \qquad \ldots (Equation\ 26)$$

<CoMP transmission mode: JT>

In this transmission mode, signals are transmitted in cell 1 to cell 3, and, if the cells to carry out JT are cell 1 and cell 2, in JT, the CQIs are re-calculated as shown in following equation 27 (FIG. 3D).

[30]

$$CQI_1 + \Delta_{JT} \left( \Delta_{JT} = \frac{(\sqrt{S_1} + \sqrt{S_2})^2}{I_{out} + N + S_3} - \frac{S_1}{I_{out} + N + S_2 + S_3} \right) \qquad \ldots (Equation\ 27)$$

In conventional proposal 5, a radio base station apparatus sets the measurement pattern for each CoMP transmission mode for a user terminal, and the user terminal has to return feedback in accordance with the measurement patterns. Consequently, there is a problem that the system becomes complex.

The present inventors have made an earnest study taking into account the above conventional proposals, and, focusing on the fact that the desired signal (S) is predominant in the SINR, found out that it is possible to reduce the quantization bits and furthermore reduce the overhead of feedback, by using the differences and ratios of interference signals (I), which are relatively not predominant, between cells, as parameters. Also, by using such differences and ratios of interference signals (I), which are relatively not predominant, between cells, as parameters, a smaller dynamic range than the dynamic range of differences and ratios of desired signals (S) between cells can be achieved, and therefore even higher accuracy can be achieved.

That is, a gist of the present invention is that a user terminal calculates channel quality indicators for coordinated multiple-point transmission using interference component ratios between cells, and feeds back these channel quality indicators, and a radio base station apparatus re-calculates the channel quality indicators in accordance with the transmission mode of coordinated multiple-point transmission using the channel quality indicators fed back from the user terminal, and, by this means, when CoMP transmission is applied, upon updating the CQIs that are given as feedback, it is possible to prevent the increase of the overhead of feedback information, and furthermore improve the accuracy of the updated CQIs.

CQIs according to the present invention may be defined as follows.

(First definition)

According to this new definition, the CQI of the serving cell (cell 1) is defined assuming that the desired signal of that cell is the signal component and signals other than the signal of the serving cell constitute the interference component, and the CQIs of coordinated cells (cell 2 and cell 3) are defined as the ratios (differences) of the interference components of the coordinated cells (cell 2 and cell 3) to the interference component of the serving cell (cell 1) (the interference component of signals other than the desired signal of the serving cell). For example, the CQI of a coordinated cell may be represented as the ratio (difference) of interference components, apart from the desired signals of the serving cell and one coordinated cell. To be more specific, CQI 1, CQI 2 and CQI 3 are defined as in following equation 1, following equation 28, and following equation 29, respectively. CQIs defined in this way are fed back from a user terminal to a radio base station apparatus as CQIs for CoMP transmission. That is, a CQI for single-cell transmission (following equation 1) and CQIs for CoMP transmission ($\Delta I$) are fed back from the user terminal to the radio base station apparatus. Note that, although a case of using interference component ratios is described here, it is equally possible to use differences of interference components with the present invention.

[31]

$$\frac{S_1}{I_{out}+N+S_2+S_3} \qquad \ldots (\text{Equation } 1)$$

[32]

$$\Delta I_2 = \frac{I_2}{I_1} = \frac{I_{out}+N+S_3}{I_{out}+N+S_2+S_3} \qquad \ldots (\text{Equation } 28)$$

[33]

$$\Delta I_3 = \frac{I_3}{I_1} = \frac{I_{out}+N+S_2}{I_{out}+N+S_2+S_3} \qquad \ldots (\text{Equation } 29)$$

Note that, in equation 28 and equation 29, $I_x$ (x=, 2, and 3) is interference components, where $I_1$ is interference, which excludes the desired signal of the serving cell (having the highest signal strength), $I_2$ is interference, which excludes the desired signal of the serving cell and the desired signal of the cell where the signal strength is the second strongest, and $I_3$ is interference, which excludes the desired signal of the serving cell and the desired signal of the cell where the signal strength is the third strongest. $\Delta I_y$ is the ratio of the cells $I_y$ (y=2 and 3) other than the serving cell, to $I_1$.

In this case, when the CQIs are updated in a radio base station apparatus in accordance with various CoMP transmission modes, the following will be given.

<Single-cell transmission>

If cell 1 is the serving cell, CQI 1 can be used as the CQI (FIG. 3A).

<CoMP transmission mode: CS and DPS/DPB when the transmission point is the serving cell>

In this transmission mode, signals are transmitted in serving cell 1 and cell 3, and, when signals are transmitted in serving cell 1, re-calculation is made as shown in following equation 30 (FIG. 3B). When signals are transmitted in serving cell 1 and cell 2, and, when signals are transmitted in serving cell 1, re-calculation is made as shown in following equation 31 (FIG. 3E). When signals are transmitted in serving cell 1, re-calculation is made as shown in following equation 32 (FIG. 3F).

[34]

$$\frac{CQI_1}{\Delta I_2} \qquad \dots (\text{Equation } 30)$$

[35]

$$\frac{CQI_1}{\Delta I_3} \qquad \dots (\text{Equation } 31)$$

[36]

$$\frac{CQI_1}{\Delta I_2 + \Delta I_3 - 1} \qquad \dots (\text{Equation } 32)$$

<CoMP transmission mode: DPS/DPB when the transmission point is a cell other than the serving cell>

In this transmission mode, signals are transmitted in cell 2. In this transmission mode, signals are transmitted in serving cell 1 to cell 3, and, when signals are transmitted in cell 2, re-calculation is made as shown in following equation 33 (FIG. 3G). When signals are transmitted in cell 2 and cell 3, and, when signals are transmitted in cell 2, re-calculation is made as shown in following equation 34 (FIG. 3H). When signals are transmitted in cell 2, re-calculation is made as shown in following equation 35 (FIG. 3C).

[37]

$$\frac{1 - \Delta I_2}{CQI_1 + \Delta I_2} \qquad \dots (\text{Equation } 33)$$

[38]

$$\frac{1-\Delta I_2}{\Delta I_2} \qquad \dots (Equation\ 34)$$

[39]

$$\frac{1-\Delta I_2}{\Delta I_2+\Delta I_3-1} \qquad \dots (Equation\ 35)$$

<CoMP transmission mode: JT>

In this transmission mode, signals are transmitted in serving cell 1 to cell 3, and, when the cells to carry out JT are cell 1 and cell 2, the CQIs are re-calculated as shown in following equation 36 (FIG. 3D). When signals are transmitted in serving cell 1 and cell 2, and the cells to carry out JT are cell 1 and cell 2, the CQIs are re-calculated as shown in following equation 37 (FIG. 3I).

[40]

$$\frac{(\sqrt{CQI_1}+\sqrt{1-\Delta I_2})^2}{\Delta I_2} \qquad \dots (Equation\ 36)$$

[41]

$$\frac{(\sqrt{CQI_1}+\sqrt{1-\Delta I_2})^2}{\Delta I_2+\Delta I_3-1} \qquad \dots (Equation\ 37)$$

Also, CQI 1, CQI 2 and CQI 3 may be defined as shown in following equation 1, following equation 38, and following equation 39, respectively. CQIs defined in this way are fed back from a user terminal to a radio base station apparatus as CQIs for CoMP transmission. That is, a CQI for single-cell transmission (following equation 1) and CQIs for CoMP transmission ($\Delta I$) are fed back from the user terminal to the radio base station apparatus. Note that, although a case of using interference component ratios is described here, it is equally possible to use differences of interference components with the present invention. Although, in equation 28 and equation 29, with respect to the CQIs for CoMP transmission ($\Delta I$), the interference components $I_x$ (x=1, 2, and 3) are interference component to exclude the serving cell and the cell where the signal strength (RSRP, RSRQ) is the x-th highest, in equation 38 and equation 39, with respect to the CQIs for CoMP transmission ($\Delta I$), the interference components $I_x$ (x=, 2 and 3) are interference components to exclude the cell where the signal strength (RSRP, RSRQ) is the x-th highest.

[42]

$$\frac{S_1}{I_{out}+N+S_2+S_3} \qquad \dots (Equation\ 1)$$

[43]

14

$$\Delta I_2 = \frac{I_2}{I_1} = \frac{I_{out} + N + S_3}{I_{out} + N + S_2 + S_3} \qquad \dots \text{(Equation 38)}$$

[44]

$$\Delta I_3 = \frac{I_3}{I_1} = \frac{I_{out} + N}{I_{out} + N + S_2 + S_3} \qquad \dots \text{(Equation 39)}$$

In this case, when the CQIs are updated in a radio base station apparatus in accordance with various CoMP transmission modes, the following will be given.

<Single-cell transmission>

If cell 1 is the serving cell, CQI 1 can be used as the CQI (FIG. 3A).

<CoMP transmission mode: CS and DPS/DPB when the transmission point is the serving cell>

In this transmission mode, signals are transmitted in serving cell 1 and cell 3, and, when signals are transmitted in serving cell 1, re-calculation is made as shown in following equation 30 (FIG. 3B). When signals are transmitted in serving cell 1 and cell 2, and, when signals are transmitted in serving cell 1, re-calculation is made as shown in following equation 40 (FIG. 3E). When signals are transmitted in serving cell 1, re-calculation is made as shown in following equation 31 (FIG. 3F).

[45]

$$\frac{CQI_1}{\Delta I_2} \qquad \dots \text{(Equation 30)}$$

[46]

$$\frac{CQI}{1 - \Delta I_2 + \Delta I_3} \qquad \dots \text{(Equation 40)}$$

[47]

$$\frac{CQI_1}{\Delta I_3} \qquad \dots \text{(Equation 31)}$$

<CoMP transmission mode: DPS/DPB when the transmission point is a cell other than the serving cell>

In this transmission mode, signals are transmitted in serving cell 1 to cell 3, and, when signals are transmitted in serving cell 2, re-calculation is made as shown in following equation 33 (FIG. 3G). When signals are transmitted in cell 2 and cell 3, and, when signals are transmitted in cell 2, re-calculation is made as shown in following equation 34 (FIG. 3H). When signals are transmitted in cell 2, re-calculation is made as shown in following equation 41 (FIG. 3C).

[48]

$$\frac{1 - \Delta I_2}{CQI_1 + \Delta I_2} \qquad \dots (\text{Equation } 33)$$

[49]

$$\frac{1 - \Delta I_2}{\Delta I_2} \qquad \dots (\text{Equation } 34)$$

[50]

$$\frac{1 - \Delta I_2}{\Delta I_3} \qquad \dots (\text{Equation } 41)$$

<CoMP transmission mode: JT>

In this transmission mode, signals are transmitted in serving cell 1 to cell 3, and, if the cells to carry out JT are cell 1 and cell 2, the CQIs are re-calculated as shown in following equation 36 (FIG. 3D). If signals are transmitted in serving cell 1 and cell 2, and the cells to carry out JT are cell 1 and cell 2, the CQIs are re-calculated as shown in following equation 42 (FIG. 3I).

[51]

$$\frac{(\sqrt{CQI_1} + \sqrt{1 - \Delta I_2})^2}{\Delta I_2} \qquad \dots (\text{Equation } 36)$$

[52]

$$\frac{\left(\sqrt{CQI_1} + \sqrt{1 - \Delta I_2}\right)^2}{\Delta I_3} \qquad \dots (\text{Equation } 42)$$

Also, CQI 1, CQI 2 and CQI 3 may be defined as shown in following equation 1, following equation 43, and following equation 44, respectively. CQIs defined in this way are fed back from a user terminal to a radio base station apparatus as CQIs for CoMP transmission. That is, a CQI for single-cell transmission (following equation 1) and CQIs for CoMP transmission ($\Delta$I) are fed back from the user terminal to the radio base station apparatus. Note that, although a case of using interference component ratios is described here, it is equally possible to use differences of interference components with the present invention. Although, in equation 28 and equation 29, with respect to the CQIs for CoMP transmission ($\Delta$I), the interference components $I_x$ (x=, 2, and 3) are interference component to exclude the serving cell and the cell where the signal strength (RSRP, RSRQ) is the x-th highest, in equation 43 and equation 44, with respect to the CQIs for CoMP transmission ($\Delta$I), the interference components $I_x$ (x=, 2 and 3) are interference components to exclude the cell where the signal strength (RSRP, RSRQ) is the x-th highest.

[53]

$$\frac{S_1}{I_{out}+N+S_2+S_3} \qquad \ldots (\text{Equation 1})$$

[54]

$$\Delta I_2 = \frac{I_2}{I_1} = \frac{I_{out}+N+S_1+S_3}{I_{out}+N+S_2+S_3} \qquad \ldots (\text{Equation 43})$$

[55]

$$\Delta I_3 = \frac{I_3}{I_1} = \frac{I_{out}+N+S_1+S_2}{I_{out}+N+S_2+S_3} \qquad \ldots (\text{Equation 44})$$

Also, in this case, too, it is possible to update the CQIs in the radio base station apparatus in accordance with various CoMP transmission modes.

When the above-described first definition is applied with respect to CQIs, the differences and ratios of interference signals between cells have a smaller dynamic range than the differences and ratios of desired signals between cells, so that, if signaling is carried out with the same number of quantization bits, higher accuracy of quantization is achieved, and the same accuracy of quantization can be achieved by performing signaling with a smaller number of bits. Also, since CQI 1 is a CQI for single-cell transmission, it is possible to use CQI 1 as is upon a fallback to single-cell transmission, which is suitable for use. This first definition is the most suitable for single-cell transmission, and also is suitable for CS, DPS and DPB of CoMP transmission modes as well. Also, according to the first definition, CQI 1 is a CQI for single-cell transmission and CQI 2 and CQI 3 are CQIs for CoMP transmission, so that, when CoMP transmission is applied, only CQI 2 and CQI 3 have to be fed back as CQIs for CoMP. In this way, according to this definition, it is possible to use a CQI that is suitable for single-cell transmission, and furthermore re-calculate accurate CQIs for CoMP transmission. Note that, although three-cell CoMP transmission has been described here, it is equally possible to apply the present invention to two-cell CoMP transmission or CoMP transmission of four or more cells.

(Second definition)

According to this new definition, the CQI of the serving cell (cell 1) is defined assuming that the desired signal of that cell is the signal component and signals other than the signal of the serving cell constitute the interference component, and the CQIs of coordinated cells (cell 2 and cell 3) are defined as the ratios (differences) of the signal components of the coordinated cells (cell 2 and cell 3) to the signal component (the desired signal of the serving cell) of the serving cell (cell 1), and the ratios (differences) of the interference components (interference components other than the desired signals of the serving cell and one coordinated cell) of the coordinated cells (cell 2 and cell 3) to the interference component (interference components other than the desired signal of the serving cell) of the serving cell (cell 1). To be more specific, CQI 1, CQI 2 and CQI 3 are defined as shown in following equation 1, following equation 18 and equation 28 (CQI 2), and following equation 19 and equation 29 (CQI 3), respectively. CQIs defined in this way are fed back from a user terminal to a radio base station apparatus as CQIs for CoMP transmission. That is, a CQI for single-cell transmission (following equation 1) and CQIs for CoMP transmission ($\Delta$I and $\Delta$S) are fed back from the user terminal to the radio base station apparatus. Note that, although a case of using signal component ratios and interference component ratios is described here, the present invention may also make use of differences of signal components and differences of interference components as well.

[56]

$$\frac{S_1}{I_{out}+N+S_2+S_3} \qquad \ldots (Equation\ 1)$$

[57]

$$\Delta S_2 = \frac{S_2}{S_1} \qquad \ldots (Equation\ 18)$$

[58]

$$\Delta I_2 = \frac{I_2}{I_1} \qquad \ldots (Equation\ 28)$$

[59]

$$\Delta S_3 = \frac{S_3}{S_1} \qquad \ldots (Equation\ 19)$$

[60]

$$\Delta I_3 = \frac{I_3}{I_1} \qquad \ldots (Equation\ 29)$$

Note that, in equation 18 and equation 19, $S_1$ is the signal component (signal strength) of the serving cell, $S_2$ is the signal component of the cell where the signal strength is the second strongest, $S_3$ is the signal component of the cell where the signal strength is the third strongest, and $\Delta S_2$ and $\Delta S_3$ are the ratios of the signal components of coordinated cells (cell 2 and cell 3) to the signal component (the desired signal of the serving cell) of the serving cell (cell 1). Also, in equation 28 and equation 29, $I_1$ is interference that excludes the desired signal of the serving cell (having the highest signal strength), $I_2$ is interference that excludes the desired signal of the serving cell and the desired signal of the cell where the signal strength is the second strongest, $I_3$ is interference that excludes the desired signal of the serving cell and the desired signal of the cell where the signal strength is the third strongest, and $\Delta I_2$ and $\Delta I_3$ are the ratios of the interference components (interference components other than the desired signals of the serving cell and one coordinated cell) of coordinated cells (cell 2 and cell 3) to the interference component (interference components other than the desired signal of the serving cell) of the serving cell (cell 1). Here, the signal strength of the serving cell (cell 1) is the strongest, the signal strength of cell 2 is the second strongest, and the signal strength of cell 3 is the third strongest.

In this case, when the CQIs are updated in a radio base station apparatus in accordance with CoMP transmission modes, the following will be given.

<Single-cell transmission>

When the serving cell is cell 1, CQI 1 may be used as the CQI (FIG. 3A).

<CoMP transmission mode: CS when the transmission point is the serving cell>

In this transmission mode, when signals are transmitted in serving cell 1 and cell 3, re-calculation is made as shown in following equation 30 (FIG. 3B).

[61]

$$\frac{CQI_1}{\Delta I_2} \qquad \dots (Equation\ 30)$$

<CoMP transmission mode: when the transmission point is a cell other than the serving cell>

In this transmission mode, when signals are transmitted in serving cell 1 and cell 3, re-calculation is made as shown in following equation 45 (FIG. 3B).

[62]

$$\frac{CQI_1}{1 - CQI_1 \times \Delta S_2} \qquad \dots (Equation\ 45)$$

When the above-described second definition is applied with respect to CQIs, the number of signaling bits can be distributed between the signal component ratio ($\Delta S$) and the interference component ratio ($\Delta I$). The proportions in this distribution can be changed as appropriate in accordance with the channel state, so as to achieve more accurate CQIs. For example, the number of signaling bits may be distributed evenly between $\Delta I$ and $\Delta S$, or may be distributed according to the ranges of $\Delta I$ and $\Delta S$. Also, the radio base station apparatus may use the ratio ($\Delta S$) of the signal component and the ratios of the interference components ($\Delta I$) that are fed back, in re-calculation, on an as-is basis, may select (switch) as appropriate depending on the serving point and do re-calculation, or may re-calculate by averaging and weighting $\Delta S$ and $\Delta I$ in accordance with the channel state, to achieve more accurate CQIs. When this second definition is applied, the dynamic range of $\Delta I$ is small, so that, if signaling is carried out with the same number of quantization bits, higher accuracy of quantization is achieved, and the same accuracy of quantization can be achieved by performing signaling with a smaller number of bits. Also, since CQI 1 is a CQI for single-cell transmission, it is possible to use CQI 1 as is upon a fallback to single-cell transmission, which is suitable for use. This second definition is the most suitable for single-cell transmission, and also is suitable for CS, DPS and DPB of CoMP transmission modes as well. Also, according to the second definition, CQI 1 is a CQI for single-cell transmission and CQI 2 and CQI 3 are CQIs for CoMP transmission, so that, when CoMP transmission is applied, only CQI 2 and CQI 3 have to be fed back as CQIs for CoMP. In this way, according to this definition, it is possible to use a CQI that is suitable for single-cell transmission, and furthermore re-calculate accurate CQIs for CoMP transmission. Note that, although three-cell CoMP transmission has been described here, it is equally possible to apply the present invention to two-cell CoMP transmission or CoMP transmission of four or more cells.

Note that the ratios of interference components according to the first definition and second definition above are by no means limited to the equations given above. For example, it is possible to switch the denominator and the numerator of $\Delta I$ in equation 28, equation 29, equation 38, equation 39, equation 43 and equation 44, and perform the calculations.

(Third definition)

According to this new definition, the CQI of the serving cell (cell 1) is defined assuming that the desired signal of that cell is the signal component and signals other than the signal of the serving cell constitute the interference component, and the CQIs of coordinated cells (cell 2 and cell 3) are defined assuming that the desired signals of the coordinated cells are the signal components and interference and thermal noise from cells apart from the CoMP set are the interference components. To be more specific, CQI 1, CQI 2 and CQI 3 are defined as shown in following equation 1, following equation 8, and following equation 9, respectively. CQIs defined in this way are fed back from a user terminal to a radio base station apparatus as CQIs for CoMP transmission.

[63]

$$\frac{S_1}{I_{out}+N+S_2+S_3} \qquad\qquad \ldots (\text{Equation } 1)$$

[64]

$$\frac{S_2}{I_{out}+N} \qquad\qquad \ldots (\text{Equation } 8)$$

[65]

$$\frac{S_3}{I_{out}+N} \qquad\qquad \ldots (\text{Equation } 9)$$

In this case, when the CQIs are updated in a radio base station apparatus in accordance with CoMP transmission modes, the following will be given.

<Single-cell transmission>

When the serving cell is cell 1, CQI 1 may be used as the CQI (FIG. 3A).

<CoMP transmission mode: CS and DPS/DPB when the transmission point is the serving cell>

In this transmission mode, when signals are transmitted in serving cell 1 and cell 3, re-calculation is made as shown in following equation 46 (FIG. 3B).

[66]

$$\frac{CQI_1 \times (1 + CQI_2 + CQI_3)}{1 + CQI_3} \qquad\qquad \ldots (\text{Equation } 46)$$

<CoMP transmission mode: DPS/DPB when the transmission point is a cell other than the serving cell>

In this transmission mode, signals are transmitted in cell 2. In this transmission mode, when signals are transmitted in serving cell 1 to cell 3, re-calculation is made as shown in following equation 47 (FIG. 3G).

[67]

$$\frac{CQI_2}{(1 + CQI_1) \times (1 + CQI_3) + CQI_1 \times CQI_2} \qquad\qquad \ldots (\text{Equation } 47)$$

When the above third definition is applied with respect to CQIs, since CQI 1 is a CQI for single-cell transmission, it is possible to use CQI 1 as is upon a fallback to single-cell transmission, which is suitable for use. Also, according to the third definition, CQI 1 is a CQI for single-cell transmission and CQI 2 and CQI 3 are CQIs for CoMP transmission, so that, when CoMP transmission is applied, only CQI 2 and CQI 3 have to be fed back as CQIs for CoMP. Consequently, it is possible to reduce the overhead of feedback information. In this way, according to this definition, it is possible to use a CQI that is suitable for single-cell transmission, and furthermore re-calculate accurate CQIs for CoMP transmission. Note that, although three-cell CoMP transmission has been described here, it is equally possible to apply the present invention to two-cell CoMP transmission or CoMP transmission of four or more cells.

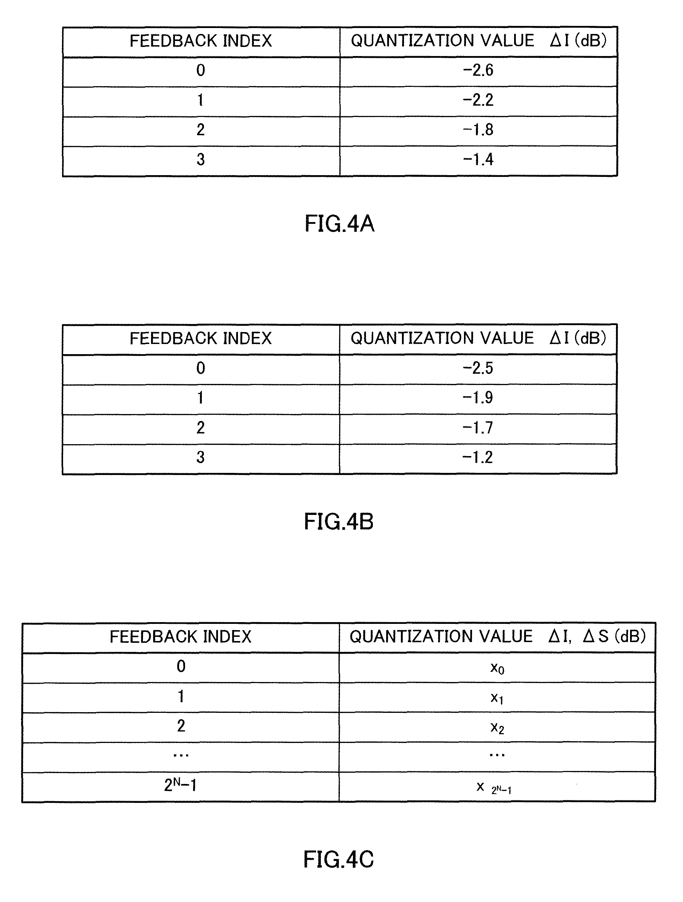

The reporting method from a user terminal to a radio base station apparatus upon feeding back CQIs defined based on the above-described first to third definitions will be described using FIG. 4.

FIG. 4A and FIG. 4B show tables to use when feeding back CQIs defined according to the first definition, and show tables in which the quantization values of CoMP CQIs ($\Delta$I) and feedback indices are associated with each other. In the table of FIG. 4A, quantization values are provided at equal intervals, such that the feedback index is 0 when the quantization value of $\Delta$I is -2.6 dB, the feedback index is 1 when the quantization value of $\Delta$I is -2.2 dB, the feedback index is 2 when the quantization value of $\Delta$I is -1.8 dB, and the feedback index is 3 when the quantization value of $\Delta$I is -1.4 dB. Also, in the table of FIG. 4B, quantization values are provided at unequal intervals, such that the feedback index is 0 when the quantization value of $\Delta$I is -2.5 dB, the feedback index is 1 when the quantization value of $\Delta$I is -1.9 dB, the feedback index is 2 when the quantization value of $\Delta$I is -1.7 dB, and the feedback index is 3 when the quantization value of $\Delta$I is -1.2 dB.

FIG. 4C shows a table to use when feeding back CQIs defined according to the second definition, and shows a table in which the quantization values of CoMP CQIs ($\Delta$I and $\Delta$S) and feedback indices are associated with each other. The range of quantization values for CoMP CQIs varies between $\Delta$I and $\Delta$S, and therefore, in the table shown in FIG. 4C, $\Delta$I and $\Delta$S are associated with feedback indices in a range covering both the range of quantization values for $\Delta$I and the range of quantization values for $\Delta$S.

A user terminal reports quantized information using the tables shown in FIG. 4A to FIG. 4C to the radio base station apparatus through higher layer signaling. Note that the offset levels shown in the tables of FIG. 4A to FIG. 4C are examples and can be changed as appropriate. The quantization values, the intervals between the quantization values, and the number of feedback indices can be changed as appropriate as well.

Which of the above definitions a user terminal uses to feed back CQIs can be controlled on the radio base station apparatus side. For example, the radio base station apparatus determines which definition to use, and reports that information to the user terminal through higher layer signaling. Alternatively, the radio base station apparatus may report the pattern of interference measurement to the user terminal through higher layer signaling, and the user terminal may measure the CQIs of corresponding definitions and feed them back. In the latter scenario, the user terminal is able to measure and feedback CQIs without even being aware of which definitions are used.

(Configuration of radio communication system)

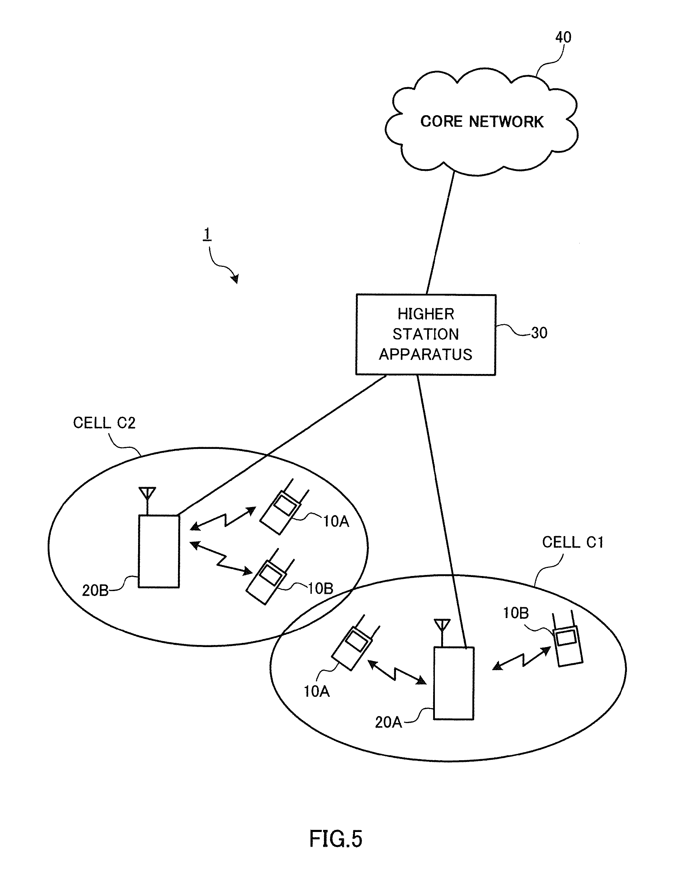

Now, a radio communication system according to an embodiment of the present invention will be described below in detail. FIG. 5 is a diagram to explain a system configuration of a radio communication system according to the present embodiment. Note that the radio communication system shown in FIG. 5 is a system to accommodate, for example, the LTE system or SUPER 3G. In this radio communication system, carrier aggregation to group a plurality of fundamental frequency blocks into one, where the system band of the LTE system is one unit, is used. Also, this radio communication system may be referred to as "IMT-Advanced" or may be referred to as "4G."

As shown in FIG. 5, the radio communication system 1 is configured to include radio base station apparatuses 20A and 20B, and a plurality of first and second user terminals 10A and 10B that communicate with these radio base station apparatuses 20A and 20B. The radio base station apparatuses 20A and 20B are connected with a higher station apparatus 30, and this higher station apparatus 30 is connected with a core network 40. Also, the radio base station apparatuses 20A and 20B are connected with each other by wire connection or by wireless connection. The first and second user terminals 10A and 10B are able to communicate with the radio base station apparatuses 20A and 20B in cells C1 and C2. Note that the higher station apparatus 30 includes, for example, an access gateway apparatus, a radio network controller (RNC), a mobility management entity (MME) and so on, but is by no means limited to these. Also, between cells, when necessary, CoMP transmission is controlled by a plurality of base stations.

Although the first and second user terminals 10A and 10B may be either LTE terminals or LTE-A terminals, the following description will be given simply with respect to the first and second user terminals, unless specified otherwise. Also, although the first and second user terminals 10A and 10B will be described to perform radio communication with the radio base station apparatuses 20A and 20B for ease of explanation, more generally, user equipment (UE), which includes both mobile terminal apparatuses and fixed terminal apparatuses, may be used as well.

In the radio communication system 1, as radio access schemes, OFDMA (Orthogonal Frequency Division Multiple Access) is applied to the downlink, and SC-FDMA (Single-Carrier Frequency Division Multiple Access) is applied to the uplink, but the uplink radio access scheme is by no means limited to this. OFDMA is a multi-carrier transmission scheme to perform communication by dividing a frequency band into a plurality of narrow frequency bands (subcarriers) and mapping data to each subcarrier. SC-FDMA is a single carrier transmission scheme to reduce interference between terminals by dividing, per terminal, the system band into bands formed with one or continuous resource blocks, and allowing a plurality of terminals to use mutually different bands.

Downlink communication channels include a PDSCH (Physical Downlink Shared Channel), which is a downlink data channel used by the first and second user terminals 10A and 10B on a shared basis, and downlink L1/L2 control channels (PDCCH, PCFICH, PHICH). Transmission data and higher control information are transmitted by the PDSCH. Scheduling information for the PDSCH and the PUSCH and so on are transmitted by the PDCCH (Physical Downlink Control Channel). The number of OFDM symbols to use for the PDCCH is transmitted by the PCFICH (Physical Control Format Indicator Channel). HARQ ACK and NACK for the PUSCH are transmitted by the PHICH (Physical Hybrid-ARQ Indicator Channel).

Uplink communication channels include a PUSCH (Physical Uplink Shared Channel), which is an uplink data channel used by each user terminal on a shared basis, and a PUCCH (Physical Uplink Control Channel), which is an uplink control channel. By means of this PUSCH, transmission data and higher control information are transmitted. Furthermore, the PUCCH transmits downlink received quality information (CQI), ACK/NACK, and so on.

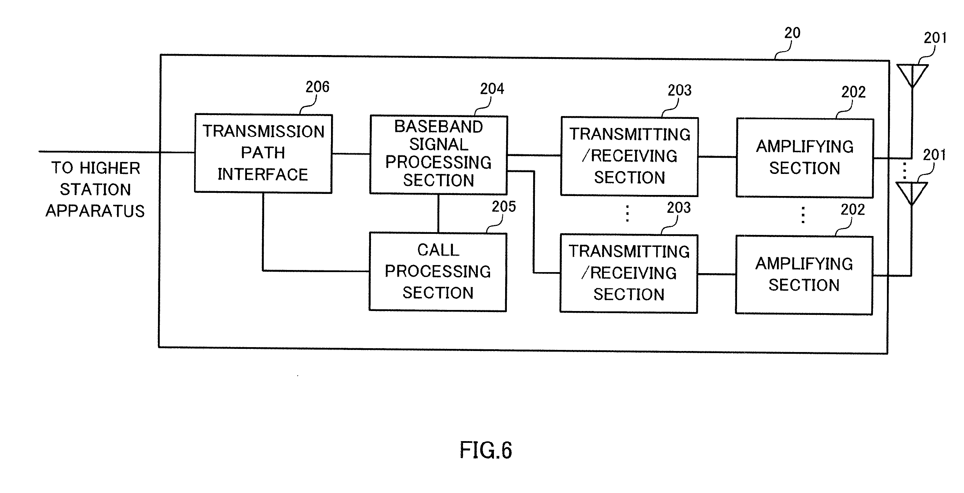

Now, an overall configuration of a radio base station apparatus according to the present embodiment will be explained with reference to FIG. 6. Note that the radio base station apparatuses 20A and 20B have the same configuration and therefore hereinafter will be described simply as "radio base station apparatus 20." Also, the first and second user terminals 10A and 10B, which will be described later, also have the same configuration and therefore hereinafter will be described simply as "user terminal 10."

The radio base station apparatus 20 includes transmitting/receiving antennas 201, amplifying sections 202, transmitting/receiving sections (reporting sections) 203, a baseband signal processing section 204, a call processing section 205, and a transmission path interface 206. Transmission data to be transmitted from the radio base station apparatus 20 to the user terminal on the downlink is input from the higher station apparatus 30 into the baseband signal processing section 204 via the transmission path interface 206.

In the baseband signal processing section 204, a signal of a downlink data channel is subjected to a PDCP layer process, division and coupling of transmission data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process, and a precoding process. Furthermore, as for a signal of a physical downlink control channel, which is a downlink control channel, transmission processes such as channel coding and an inverse fast Fourier transform are performed.

Also, the baseband signal processing section 204 reports control information for allowing each user terminal 10 to perform radio communication with the radio base station apparatus 20, to the user terminals 10 connected to the same cell, by a broadcast channel. The information for communication in the cell includes, for example, the uplink or downlink system bandwidth, root sequence identification information (root sequence index) for generating random access preamble signals in the PRACH (Physical Random Access Channel), and so on.

In the transmitting/receiving sections 203, baseband signals that are output from the baseband signal processing section 204 are converted into a radio frequency band. The amplifying sections 202 amplify the radio frequency signals having been subjected to frequency conversion, and output the results to the transmitting/receiving antennas 201. Note that the transmitting/receiving sections 203 constitute a receiving means to receive uplink signals including information such as phase differences between a plurality of cells and PMIs, and a transmitting means to transmit transmission signals by coordinated multiple-point transmission. Also, the transmitting/receiving sections 203 also function as a reporting section when the radio base station apparatus reports inter-cell CSI candidate values to the user terminal.

Meanwhile, as for signals to be transmitted from the user terminal 10 to the radio base station apparatus 20 on the uplink, radio frequency signals received by the transmitting/receiving antennas 201 are amplified in the amplifying sections 202, converted into baseband signals through frequency conversion in the transmitting/receiving sections 203, and input in the baseband signal processing section 204.

The baseband signal processing section 204 performs an FFT process, an IDFT process, error correction decoding, a MAC retransmission control receiving process, and RLC layer and PDCP layer receiving processes, for the transmission data that is included in the baseband signals received on the uplink. The decoded signals are transferred to the higher station apparatus 30 through the transmission path interface 206.

The call processing section 205 performs call processing such as setting up and releasing communication channels, manages the state of the radio base station apparatus 20 and manages the radio resources.

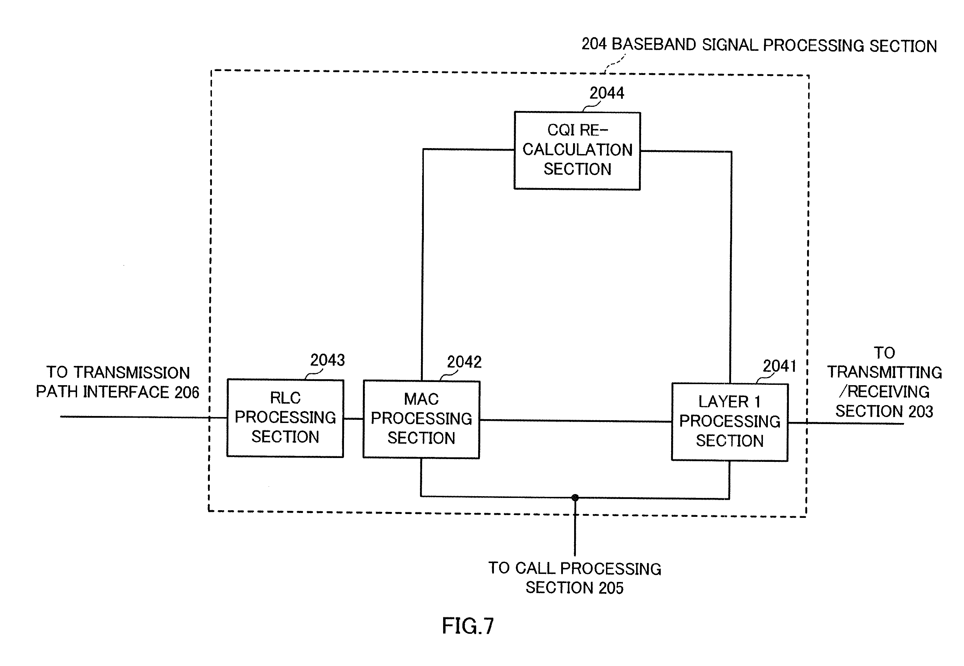

FIG. 7 is a block diagram showing a configuration of a baseband signal processing section in the radio base station apparatus shown in FIG. 6. The baseband signal processing section 204 is primarily formed with a layer 1 processing section 2041, a MAC processing section 2042, an RLC processing section 2043 and a CQI re-calculation section 2044.

The layer 1 processing section 2041 mainly performs processes related to the physical layer. The layer 1 processing section 2041 performs processes for a signal received on the uplink, including, for example, channel decoding, a discrete Fourier transform (DFT), frequency demapping, an inverse fast Fourier transform (IFFT), and data demodulation. Also, the layer 1 processing section 2041 performs processes for a signal to transmit on the downlink, including channel coding, data modulation, frequency mapping, an inverse fast Fourier transform (IFFT) and so on.

The MAC processing section 2042 performs processes for a signal received on the uplink, such as MAC layer retransmission control, uplink/downlink scheduling, PUSCH/PDSCH transport format selection, resource block selection for the PUSCH/PDSCH and so on.

The RLC processing section 2043 performs, for a packet that is received on the uplink/a packet to transmit on the downlink, packet division, packet combining, RLC layer retransmission control and so on.

The CQI re-calculation section 2044 re-calculates CQIs in accordance with the transmission mode of CoMP transmission using CQIs fed back from the user terminal. When CQIs are defined according to the first definition, the CQI re-calculation section 2044 receives CQIs defined in the above-described first to third definitions from the user terminal as feedback, and re-calculates CQIs in accordance with the transmission mode of CoMP transmission using these CQIs.

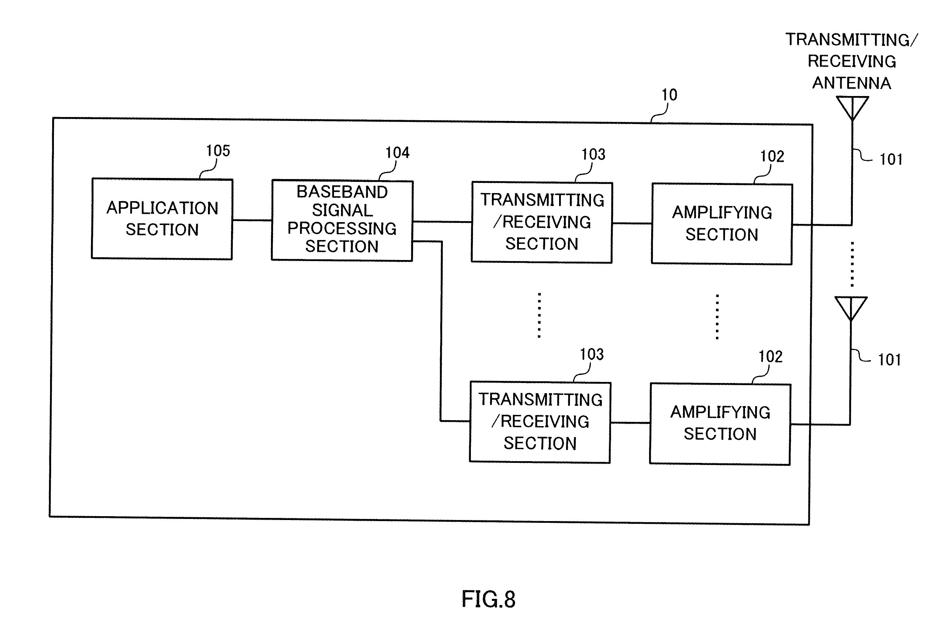

Next, an overall configuration of a user terminal according to the present embodiment will be described with reference to FIG. 8. An LTE terminal and an LTE-A terminal have the same hardware configurations in principle parts, and therefore will be described indiscriminately. A user terminal 10 has transmitting/receiving antennas 101, amplifying sections 102, transmitting/receiving sections (receiving sections) 103, a baseband signal processing section 104, and an application section 105.

As for downlink data, radio frequency signals that are received in the transmitting/receiving antennas 101 are amplified in the amplifying sections 102, and subjected to frequency conversion and converted into baseband signals in the transmitting/receiving sections 103. The baseband signals are subjected to receiving processes such as an FFT process, error correction decoding and retransmission control, in the baseband signal processing section 104. In this downlink data, downlink transmission data is transferred to the application section 105. The application section 105 performs processes related to higher layers above the physical layer and the MAC layer. Also, in the downlink data, broadcast information is also transferred to the application section 105.

Meanwhile, uplink transmission data is input from the application section 105 into the baseband signal processing section 104. The baseband signal processing section 104 performs a mapping process, a retransmission control (HARQ) transmission process, channel coding, a DFT process, and an IFFT process. Baseband signals that are output from the baseband signal processing section 104 are converted into a radio frequency band in the transmitting/receiving sections 103. After that, the amplifying sections 102 amplify the radio frequency signals having been subjected to frequency conversion, and transmit the results from the transmitting/receiving antennas 101. Note that the transmitting/receiving sections 103 constitute a transmitting means to transmit information about phase differences, information about connecting cells, selected PMIs and so on, to the radio base station apparatus eNBs of a plurality of cells, and a receiving means to receive downlink signals.

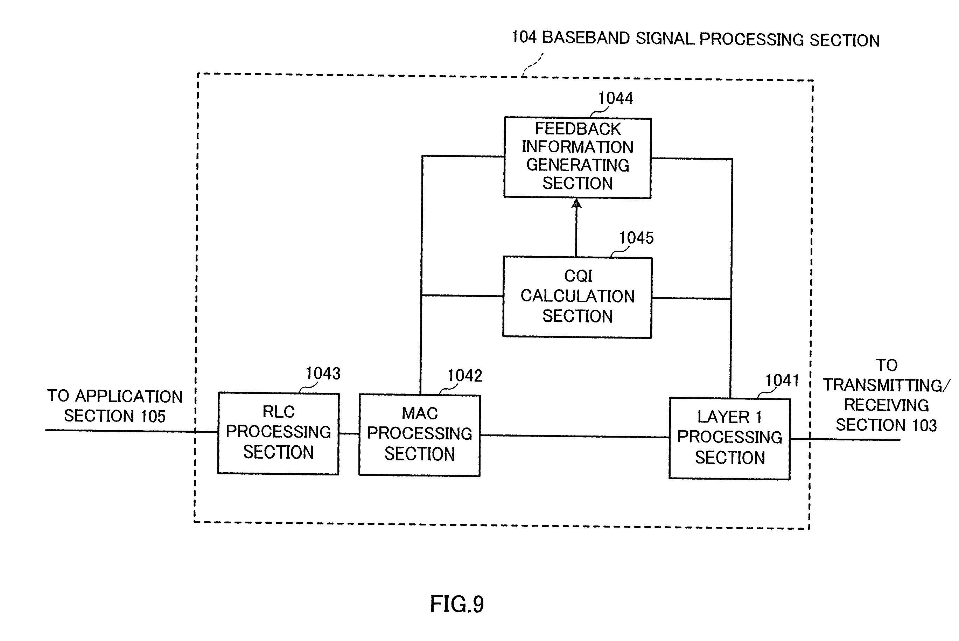

FIG. 9 is a block diagram showing a configuration of a baseband signal processing section in the user terminal shown in FIG. 8. The baseband signal processing section 104 is primarily formed with a layer 1 processing section 1041, a MAC processing section 1042, an RLC processing section 1043, a feedback information generating section 1044, and a CSI calculation section 1045.

The layer 1 processing section 1041 mainly performs processes related to the physical layer. The layer 1 processing section 1041 performs processes for a signal that is received on the downlink, including, for example, channel decoding, a discrete Fourier transform (DFT), frequency demapping, an inverse fast Fourier transform (IFFT), data demodulation and so on. Also, the layer 1 processing section 1041 performs processes for a signal to transmit on the uplink, including channel coding, data modulation, frequency mapping, an inverse fast Fourier transform (IFFT), and so on.

The MAC processing section 1042 performs, for a signal that is received on the downlink, MAC layer retransmission control (HARQ), an analysis of downlink scheduling information (specifying the PDSCH transport format, specifying the PDSCH resource blocks), and so on. Also, the MAC processing section 1042 performs, for a signal to transmit on the uplink, MAC retransmission control, an analysis of uplink scheduling information (specifying the PUSCH transport format, specifying the PUSCH resource blocks), and so on.

The RLC processing section 1043 performs, for a packet received on the downlink/a packet to transmit on the uplink, packet division, packet combining, RLC layer retransmission control and so on.

The CQI calculation section 1045 calculates CQIs from the desired signals of the cells, interference signals, interference from cells apart from the CoMP set, and thermal noise. That is, the CQI calculation section 1045 calculates a CQI for single-cell transmission and CQIs for CoMP transmission. To be more specific, when CQIs are defined in the first definition, the CQI calculation section 1045 calculates CQIs according to equation 1, equation 18 and equation 28.

Also, when CQIs are defined in the second definition, the CQI calculation section 1045 calculates CQIs according to equation 1, equation 28 and equation 29. Also, when CQIs are defined in the third definition, the CQI calculation section 1045 calculates CQIs according to equation 1, equation 8 and equation 9, from the user terminal. The CQI calculation section 1045 outputs the calculated CQIs to the feedback information generating section 1044.

Also, the CQI calculation section 1045 has the tables shown in FIG. 4A to FIG. 4C, and, in the event the first definition applies, selects feedback indices from the quantization values using the table shown in FIG. 4A or FIG. 4B. In the event the second definition applies, the CQI calculation section 1045 selects feedback indices from the quantization values using the table shown in FIG. 4C. The CQI calculation section 1045 outputs the feedback indices to the feedback information generating section 1044 as CQIs.

The feedback information generating section 1044 generates CSI (feedback information). As CSI, there are cell-specific CSI (PMI, CDI, CQI), inter-cell CSI (phase difference information and amplitude difference information), RI (Rank Indicator) and so on. The feedback information generating section 1044 uses the CQIs defined in the first to third definitions as feedback information. These CSI are fed back to the radio base station apparatus by the PUCCH and the PUSCH.

In a radio communication system having the above configuration, first, the CQI calculation section 1045 of the user terminal calculates CQIs from the desired signal of the cells, interference signals, interference from cells apart from the CoMP set, and thermal noise. That is, the CQI calculation section 1045 calculates a CQI for single-cell transmission and CQIs for CoMP transmission. At this time, the CQIs are determined based on the first to third definitions. Then, the CQIs are output to the feedback information generating section 1044. The feedback information generating section 1044 feeds back these CQIs, with other CSI, to the radio base station apparatuses of the cells carrying out CoMP transmission.

The radio base station apparatus re-calculates CQIs according to the above equations in accordance with the transmission mode of CoMP transmission using the CQIs fed back from the user terminal. In this way, with the radio communication method according to the present invention, upon updating CQIs that are given as feedback when CoMP transmission is applied, it is possible to prevent the increase of the overhead of feedback information, and furthermore improve the accuracy of the updated CQIs.

Now, although the present invention has been described in detail with reference to the above embodiment, it should be obvious to a person skilled in the art that the present invention is by no means limited to the embodiment described herein. The present invention can be implemented with various corrections and in various modifications, without departing from the spirit and scope of the present invention defined by the recitations of the claims. Consequently, the descriptions herein are provided only for the purpose of explaining examples, and should by no means be construed to limit the present invention in any way.

The disclosure of Japanese Patent Application No. 2012-061222, filed on March 16, 2012, including the specification, drawings and abstract, is incorporated herein by reference in its entirety.

**Claims**

1. A radio communication system comprising a plurality of radio base station apparatuses and a user terminal that is configured to be able to perform coordinated multiple-point transmission/reception with the plurality of radio base station apparatuses, wherein:

   the user terminal comprises:

   a calculation section that calculates a channel quality indicator for coordinated multiple-point transmission using an interference component ratio between cells; and
   a transmission section that feeds back the channel quality indicator; and

   the radio base station apparatus comprises:

   a re-calculation section that re-calculates a channel quality indicator in accordance with a transmission mode of coordinated multiple-point transmission, using the channel quality indicator fed back from the user terminal.

2. The radio communication system according to claim 1, wherein the calculation section calculates the channel quality indicator for coordinated multiple-point transmission using a signal component ratio between cells.

3. The radio communication system according to claim 1 or claim 2, wherein the calculation section has a table for quantizing the interference component ratio between cells.

**4.** The radio communication system according to claim 2, wherein the calculation section has a table for quantizing the signal component ratio between cells.

**5.** The radio communication system according to claim 2, wherein the calculation section distributes the number of bits to feed back as the channel quality indicator into a number of bits to represent the signal component ratio between cells and a number of bits to represent the interference component ratio between cells.

**6.** The radio communication system according to claim 1, wherein the user terminal feeds back a channel quality indicator for single-cell transmission to the radio base station apparatus.

**7.** A user terminal that is configured to be able to perform coordinated multiple-point transmission/reception with a plurality of radio base station apparatuses, the user terminal comprising:

a calculation section that calculates a channel quality indicator for coordinated multiple-point transmission using an interference component ratio between cells; and
a transmission section that feeds back the channel quality indicator.

**8.** A radio base station apparatus that is configured to be able to perform coordinated multiple-point transmission/reception with a user terminal, the radio base station apparatus comprising:

a re-calculation section that re-calculates a channel quality indicator in accordance with a transmission mode of coordinated multiple-point transmission, using the channel quality indicator fed back from the user terminal.

**9.** A radio communication method for a plurality of radio base station apparatuses and a user terminal that is configured to be able to perform coordinated multiple-point transmission/reception with the plurality of radio base station apparatuses, the radio communication method comprising the steps of:

at the user terminal:

calculating a channel quality indicator for coordinated multiple-point transmission using an interference component ratio between cells; and
feeding back the channel quality indicator; and

at the radio base station apparatus:

re-calculating a channel quality indicator in accordance with a transmission mode of coordinated multiple-point transmission, using the channel quality indicator fed back from the user terminal.

MAIN LOBE CONTROL FOR DESIRED USER

NULL CONTROL FOR USER IN OTHER CELLS

eNB

UE

UE

RRE

CELL

## FIG.1A

COHERENT/NON- COHERENT TRANSMISSION

eNB

UE

RRE

CELL

## FIG.1B

SELECT ONE CELL
INSTANTANEOUSLY

eNB

UE

RRE

CELL

## FIG.1C

**FIG.2A**

**FIG.2B**

FIG.3A

FIG.3B

FIG.3C

FIG.3D

FIG.3E

FIG.3F

FIG.3G

FIG.3H

FIG.3I

| FEEDBACK INDEX | QUANTIZATION VALUE $\Delta I$ (dB) |
|---|---|
| 0 | -2.6 |
| 1 | -2.2 |
| 2 | -1.8 |
| 3 | -1.4 |

FIG.4A

| FEEDBACK INDEX | QUANTIZATION VALUE $\Delta I$ (dB) |
|---|---|
| 0 | -2.5 |
| 1 | -1.9 |
| 2 | -1.7 |
| 3 | -1.2 |

FIG.4B

| FEEDBACK INDEX | QUANTIZATION VALUE $\Delta I$, $\Delta S$ (dB) |
|---|---|
| 0 | $x_0$ |
| 1 | $x_1$ |
| 2 | $x_2$ |
| ... | ... |
| $2^N - 1$ | $x_{2^N-1}$ |

FIG.4C

FIG.5

FIG.6

EP 2 827 637 A1

FIG.7

204 BASEBAND SIGNAL PROCESSING SECTION

2044 CQI RE-CALCULATION SECTION

2041 LAYER 1 PROCESSING SECTION

2042 MAC PROCESSING SECTION

2043 RLC PROCESSING SECTION

TO TRANSMITTING /RECEIVING SECTION 203

TO CALL PROCESSING SECTION 205

TO TRANSMISSION PATH INTERFACE 206

TRANSMITTING/
RECEIVING
ANTENNA

10

105
APPLICATION SECTION

104
BASEBAND SIGNAL PROCESSING SECTION

103
TRANSMITTING /RECEIVING SECTION

102
AMPLIFYING SECTION

101

103
TRANSMITTING /RECEIVING SECTION

102
AMPLIFYING SECTION

101

FIG.8

FIG.9

## INTERNATIONAL SEARCH REPORT

| International application No. |
|---|
| PCT/JP2013/056718 |

A. CLASSIFICATION OF SUBJECT MATTER
*H04W24/10*(2009.01)i, *H04W28/16*(2009.01)i

According to International Patent Classification (IPC) or to both national classification and IPC

B. FIELDS SEARCHED

Minimum documentation searched (classification system followed by classification symbols)
H04W24/10, H04W28/16

Documentation searched other than minimum documentation to the extent that such documents are included in the fields searched
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2011/049415 A2 (LG ELECTRONICS INC.), | 7,8 |
| A | 28 April 2011 (28.04.2011), | 1-6,9 |
|  | abstract; claims 1, 2, 9, 10; page 17, line 7 |  |
|  | to page 18, line 1; fig. 3(c) |  |
|  | & JP 2013-509082 A     & EP 2493088 A2 |  |
|  | & CN 102598525 A |  |
| | | |
| X | WO 2011/010863 A2 (LG ELECTRONICS INC.), | 7,8 |
| A | 27 January 2011 (27.01.2011), | 1-6,9 |
|  | abstract; claims 1, 2, 7, 9; paragraphs [0002], |  |
|  | [0003], [0136] to [0139]; fig. 15 |  |
|  | & JP 2012-533960 A     & US 2012/0134275 A1 |  |
|  | & CA 2768839 A     & CN 102474347 A |  |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 June, 2013 (07.06.13) | 18 June, 2013 (18.06.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012061222 A

**Non-patent literature cited in the description**

- Feasibility Study for Evolved UTRA and UTRAN. *3GPP,* September 2006